# EUROPEAN PATENT SPECIFICATION

(11) **EP 2 062 447 B1**
(45) Date of publication and mention of the grant of the patent: **03.07.2013**
(21) Application number: 07804222.3
(22) Date of filing: 11.09.2007
(51) Int. Cl.: H04W 4/10, H04W 76/00, H04W 84/08

(54) **PUSH-TO-TALK MOBILE COMMUNICATIONS SYSTEM, METHOD AND TERMINAL**
PUSH-TO-TALK-MOBILKOMMUNIKATIONSSYSTEM, VERFAHREN UND ENDGERÄT
SYSTÈME, PROCÉDÉ ET TERMINAL DE COMMUNICATION MOBILE DE MESSAGERIE VOCALE INSTANTANÉE (PTT)

(30) Priority: 11.09.2006 GB 0617862
(43) Date of publication of application: 27.05.2009
(73) Proprietor: Sepura PLC, Cambridge CB4 1GR (GB)
(72) Inventor: JONES, Richard, Lode Cambridge CB5 9HD (GB)
(74) Representative: Tothill, John Paul
(86) International application number: PCT/GB2007/003425
(87) International publication number: WO 2008/032042

(56) References cited:
- EP-A- 1 622 408
- EP-A- 1 643 778
- WO-A-94/17642
- US-A1- 2006 159 238

## Description

The present invention relates to mobile communications systems, and in particular, but not exclusively, to the TETRA (TErrestrial Trunked RAdio) system.

In many mobile communications systems, particularly so-called private mobile radio systems for use, for example, by the emergency services, such as the TETRA system, a user wishing to transmit may have to press and hold down a so-called Push-To-Talk (PTT) key on their terminal (e.g. handset) in order to allow the user's speech to be transmitted over the air. For example, group calls made using TETRA radio equipment normally require a user to press and hold down a Push-To-Talk key when the user wishes to transmit over the air.

However, the Applicants have recognised that there may be situations where the need for a user to press and hold a push-to-talk key in order to transmit is impractical and/or undesirable, such as, for example, if the user is driving, or engaged in activity where he or she does not have a free hand to operate the terminal, and/or it is desired for a radio to be kept in transmission in order to, e.g., monitor ambient audio signals, etc..

The Applicants believe therefore that it would be desirable for a terminal of a mobile.communications system to be able to be operable to transmit without the need to press and hold down a push-to-talk key.

The Applicants have further recognised that in such an arrangement, it would be desirable for other users of the system to still be able to access and take over the communications channel that the terminal is transmitting on, for example if circumstances or the situation so dictates.

EP 1643778 A discloses a prior art communications terminal that requests the server for the right to transmit when detecting that a voice is being inputted thereto, without pressing a PTT button. WO 94/17642 A discloses a method for assigning priority data to speech items in group calls.

According to a first aspect of the present invention, there is provided a communications terminal for a mobile communications system, comprising:
means for receiving an instruction from a user of the terminal, and/or an instruction from a remote user, to enter a mode of operation in which the communications terminal will transmit without the need for a user to press or hold a key of the communications terminal; and
means for transmitting a request to transmit together with an associated transmission priority setting in response to receiving such an instruction; and
means for, in response to the request to transit being granted, transmitting on the allocated transmission channel without the need for a user to press or hold a key of the communications terminal; and
means for interrupting the transmission on the allocated transmission channel if another terminal is granted permission to transmit on the same channel with a higher transmission priority setting; and
means for, if the terminal's transmission is interrupted, automatically attempting to resume or re-establish the transmission after the interruption has finished.

According to a second aspect of the present invention, there is provided a method of operating a communications terminal of a mobile communications system, comprising:
the communications terminal receiving an instruction to enter a mode of operation in which the communications terminal will transmit without the need for a user to press or hold a key of the communications terminal; and
in response to receiving such an instruction, the communications terminal transmitting a request to transmit together with an associated transmission priority setting; and
in response to the request to transmit being granted, the communications terminal transmitting on the allocated transmission channel without the need for a user to press or hold a key of the communications terminal; and
interrupting the communications terminal's transmission on the allocated transmission channel if another terminal is granted permission to transmit on the same channel with a higher transmission priority setting; and
the communications terminal, if the terminal's transmission is interrupted, automatically attempting to resume or re-establish its transmission after the interruption has finished.

According to a third aspect of the present invention, there is provided a mobile communications system, comprising:
a system infrastructure; and
one or more communications terminals operating in the manner of the present invention.

In the present invention, a mobile communications terminal can be arranged to transmit on an allocated transmission channel without the need for a user to press or hold a key (such as a push-to-talk key). This facilitates, for example, hands-free transmission using the terminal.

Moreover, in the present invention, the communications terminal can associate its transmissions in this mode of operation with a particular priority level, for example, by including the priority level in its initial transmission (call) request. This facilitates for example, allowing other communications terminals to take over the transmission channel allocated to the terminal operating the manner of the present invention, for example if they make a "higher priority" call request. This can avoid, for example, the terminal operating in the manner of the present invention occupying the transmission channel to the exclusion of all other users (which may, e.g., be undesirable, particularly if, for example, the terminal is left continuously transmitting for a relatively long period of time).

Thus, the present invention provides an arrangement whereby a communications terminal can, in effect, be placed in a permanent transmitting state so that a user does not have to keep pressing a PTT button to keep the terminal transmitting. This may be useful where, e.g., a user requires hands-free operation but needs to maintain radio contact. Moreover, other users can still use the radio channel or participate in the call, by making higher priority requests to that effect.

The operation of a communications terminal in the manner of the present invention can preferably be activated by the user of the terminal, for example by them making an appropriate (local or direct) input to the terminal, such as pressing a key or combination of keys, or giving a voice command to the terminal, etc..

In a preferred embodiment, such a local or direct input to the terminal can preferably be made via a detachable and/or removable control unit, that can, e.g., and preferably, be coupled to the terminal either physically, e.g., via a cable, or via a short range radio connection (such as and preferably Bluetooth) and/or via a near-field wireless connection (such as and preferably an inductive loop).

In this case a user may couple the control unit to the terminal for the purpose of configuring and/or setting up the terminal to operate in the mode of operation of the present invention (for example using a key or keys of the control unit), but then remove the control unit before the terminal is actually used (i.e. such that the terminal will be used without the control unit (controller) attached or coupled to it). In this case, as will be discussed further below, the terminal once so-configured and setup via the control unit, preferably automatically operates in the manner of the present invention once it is powered up (e.g. by switching it on or by attaching a battery) and, preferably, remains in this mode of operation across power interruptions (e.g. when it is switched off), until it is set to stop such operation (e.g. via the control unit).

In a particularly preferred embodiment, the mode of operation of the present invention can also or instead (and preferably also) be invoked remotely, by a remote user sending a command to the communications terminal, for example and preferably by over the air signalling, such as by sending a command message (e.g. a short message, such as an SDS message or a packet data message) to the communications terminal. Where a remote command message is used, then that message could and preferably does include the destination identity (group or individual) to which the terminal should address the "permanent transmit" call, and/or any other parameters needed to control aspects of the call, such as maximum transmit power and DMO frequency.

Accordingly, in a particularly preferred embodiment, a system infrastructure of the mobile communications system comprises means for transmitting an instruction (e.g., and preferably, over the air interface (of the communications system), and/or, e.g., and preferably, from a remote user) to the communications terminal to enter a mode of operation in which the terminal will transmit without the need for the user (of the terminal) to press or hold a key (e.g. push-to-talk button) of the terminal.

In response to the instruction to operate in the manner of the present invention, which, as discussed above, can be from a user of the terminal and/or from a remote user, the communications terminal preferably, again as discussed above, transmits an appropriate call request to the communications system and then, once it is assigned a transmission channel, proceeds to transmit on the channel without requiring the user to press and hold down the push-to-talk button.

The call request (request to transmit) can take any desired and suitable form. It preferably indicates that the terminal wishes to transmit in the manner of the present invention (i.e. to transmit on the channel without requiring the user to press or hold down a key (e.g. a push-to-talk button) of the terminal). In a preferred embodiment, the request to transmit (the call request) has a particular, preferably predefined or predetermined, format for indicating this. Thus, in a preferred embodiment, the terminal will transmit a predetermined request to transmit (a request to transmit having a particular, preferably predetermined, form) together with the desired transmission priority setting, when it wishes to transmit in the manner of the present invention.

The instruction to operate in the mode of the present invention preferably causes the terminal to set up a call or to convert an ongoing call to operate in the manner of the present invention.

In a particularly preferred embodiment, once the terminal has been instructed to operate in the mode of the present invention, it will automatically request permission to transmit (a call request) (e.g. and preferably whenever a channel is available to do so), and once permission to transmit (a channel) is granted, then transmit continuously until interrupted or instructed to stop.

Where the communications system can operate either via the communications system infrastructure (e.g. in a trunked mode), or via a "direct" (terminal-to-terminal) mode of operation, as is the case for a TETRA system, then the operation in the manner of the present invention can preferably be set up and carried out in either and both modes of operation. For example, the call requests could be transmitted in the required format for, e.g., voice and data trunked mode operation, or direct mode operation, as appropriate.

The priority setting that is associated with the call can be set as desired. It is preferably a selected, preferably predetermined, priority setting. In a preferred embodiment, the initiating entity (local or remote user) can set the priority for the call. Most preferably the call in the manner of the present invention is associated with a relatively low priority, as that will then help to avoid the call "hogging the transmission channel.

As discussed above, in the present invention, the call of the present invention can be interrupted by another user making a higher priority request to transmit or participate in the call.

This can be achieved in any suitable manner. For example, in a TETRA system, as a transmitting terminal can still in any event receive downlink signalling, the terminal can be commanded to stop transmitting by the system infrastructure to allow a higher priority speaker in the present call, or a user wishing to make a different, higher priority call, to take over the channel.

In a particularly preferred embodiment, if a terminal operating in the manner of the present invention has its call interrupted, it preferably monitors the channel and determines when the channel becomes free again (is not occupied by other transmissions) and then resumes its "hands-free" transmission on the channel, for example, and if necessary, by retransmitting a call request on or for the channel. In this way, the terminal will, in effect, only relinquish the channel temporarily, whilst the interrupting call is in progress. Thus, after an interruption, the terminal preferably reattempts transmission in the manner of the present invention.

Thus in the present invention, the communications terminal, if the transmission is interrupted by another transmission, will automatically attempt to resume and/or re-establish (and will resume or re-establish) its transmission after the interruption has finished.

In such arrangements, when the communications terminal is interrupted, for example by a higher priority call, the existing, "non-PTT" call in the manner of the present invention, could, for example, continue but with the system allowing the other user to transmit, or, for example, the "non-PTT" call could be cleared down and then set up again once the "interruption" has finished.

The call of the present invention may also be cleared and set up again if the terminal determines or observes that one or more parameters of the call need to be adjusted or changed. For example, the destination address of the call and/or the call mode may have to be changed.

Preferably, in such arrangements, the terminal obtains, preferably automatically, information to change or adjust the one or more parameters of the call as required, e.g. from the system infrastructure and/or from data stored in the terminal itself.

Thus in a particularly preferred embodiment, when it is determined or observed by the terminal that one or more parameters of the call need to be adjusted or changed, the existing "non-PTT" call in the manner of the present invention is cleared, the call parameter then changed or adjusted (e.g. and preferably using information automatically obtained by the terminal) and the call set up once again using the new, modified call parameter or parameters.

In a particularly preferred embodiment the terminal will remain in the mode of operation of the present invention even if it is switched on and off again, and/or (and preferably also) if its power supply is interrupted (e.g. and especially if its battery is removed and replaced). Indeed, it is particularly preferred for the terminal to automatically revert to this mode of operation over power cycles, e.g., when the battery is removed and replaced, when it is in this mode of operation, rather than, e.g., reverting to a different mode of operation when the power is interrupted. Thus, for example, the terminal will preferably automatically request the call set-up of the present invention as soon as it has powered up again (and, e.g. registered and obtained any required encryption keys), if there is a power interruption while the terminal is operating or set-up in the manner of the present invention.

Thus, in a particularly preferred embodiment, the terminal will remain in the mode of operation of the present invention, even if the terminal is powered off (whether, e.g., due to it being switched off, or its power supply being interrupted (e.g. its battery being removed) (and resume such operation automatically immediately it is powered on again).

In a preferred embodiment, the terminal can be switched out of its operation in the manner of the present invention (i.e. the "permanent transmit" call cleared), for example, and preferably, by a local or remote user giving an appropriate instruction or input to the terminal. Most preferably only the initiating entity (e.g. local or remote user) can deactivate the operation of the terminal in the manner of the present invention (and the terminal preferably otherwise remains in this operating mode, e.g. as discussed above, even through power interruptions).

The present invention can be applied to any form of call, although as will be appreciated by those skilled in the art, it will be particularly applicable to and preferably applied to group calls. It may be particularly applicable where, e.g., most of the activity in a group call takes place between two people, the user invoking the operation of the present invention and a dispatcher or controller.

The communications terminal can take any suitable or desired form. It is preferably a mobile terminal (mobile station) of a mobile communications system. The mobile station may, e.g., be portable or, e.g., vehicle mounted, etc., as is known in the art.

The various processes, etc., of the present invention to be carried out in or by the system infrastructure can be performed in any suitable and desired components of the system infrastructure and/or terminal (e.g. mobile station).

The communications system of the present invention can be any suitable such system. The present invention is particularly, but not exclusively, applicable to mobile communication systems, such as the TETRA system. Thus the present invention also extends to a communications terminal and to a method of operating a communications terminal of a mobile communications system, and to a mobile communications system and a method of operating a mobile communications system, that is in accordance with and/or that can be operated in accordance with, the present invention. The mobile communications system is preferably a TETRA system and the communications terminal is preferably a TETRA terminal.

As will be appreciated by those skilled in the art, all of the aspects and embodiments of the present invention described herein can and preferably do include, as appropriate, any one or more or all of the preferred and optional features of the invention described herein.

The methods in accordance with the present invention may be implemented at least partially using software e.g. computer programs. It will thus be seen that when viewed from further aspects the present invention provides computer software specifically adapted to carry out the method or a method herein described when installed on data processing means, a computer program element comprising computer software code portions for performing the method or a method herein described when the program element is run on data processing means, and a computer program comprising code means adapted to perform all the steps of a method or of the methods herein described when the program is run on a data-processing system. The invention also extends to a computer software carrier comprising such software which when used to operate a communications system or terminal comprising data processing means causes in conjunction with said data processing means said system or terminal to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

The present invention may accordingly suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

A number of preferred embodiments of the present invention will now be described by way of example only.

The preferred embodiments of the invention will be described with particular reference to a TETRA mobile communications system. However, as discussed above, while the present invention is particularly applicable to TETRA mobile communications systems, as will be appreciated by those skilled in the art, it is not exclusive to those systems and can be applied to other mobile communications systems and communications systems equally.

In the present embodiment, a mobile terminal (station) of a TETRA communications system has three soft keys, "Permanent Transmit Toggle", "Activate Permanent Transmit" and "Deactivate Permanent Transmit".

When the "permanent transmit call" state is not active and the "Permanent transmit toggle" or "activate permanent transmit" soft key function is invoked, the terminal enters the "permanent transmit call" state.

When the "permanent transmit call" state is active and a channel is available and unoccupied, the radio automatically requests transmission with low Tx Priority. In TETRA voice + data mode this is done using the U-TX DEMAND PDU. In direct mode (either via a gateway or not) a DM-(G)TX REQUEST and/or DM-(G)PREEMPT PDU is used.

If transmission is granted, the terminal behaves as if the PTT was continuously pressed, until the transmission is interrupted.

If there is an ongoing half duplex call, permanent transmit is applied on that call for both TMO and DMO. Otherwise, a new half duplex call is setup on the presently selected talk group or individual identity, if any (depending on the terminal being in Individual or Group mode), or the call is set up on the group or individual identity included in the remote command message, using any other parameters included with the command such as maximum transmit power and DMO frequency.

If the transmission gets interrupted, after the interruption, when the communications channel is available and unoccupied, the terminal automatically re-requests transmission as defined above.

The terminal exits the "permanent transmit call" state, and clears the call, if:
- the user explicitly clears the call using the Clear key or invoking the "Reject or exit from call" soft key function; or
- the user implicitly clears the call by performing a user-interface action that results in clearing the call.

The terminal exits the "permanent transmit call" state, and stays in the call, if:
- the "permanent transmit toggle" or "deactivate permanent transmit" soft key function is invoked when the terminal is already in "permanent transmit call" state, or;
- the PTT is pressed.

A permanent transmit call is also preferably automatically cleared and re-set up if the terminal observes that the destination address or call mode has to change (which could, e.g. happen if a terminal using direct mode operation notices that it has gone out of range of the gateway it has been using, and has to switch to working through a different gateway or to working mobile station to mobile station (i.e. without using the gateway)).

Other arrangements and enhancements would be possible.

For example, the terminal could also or instead be set into the "permanent transmit call" state by a user attaching to the terminal a control unit with buttons that allow the terminal to be set-up, configured, etc., and using the control unit to set the terminal in the "permanent transmit call" state. The control unit would then be removed, and the terminal used without the control unit attached, with the terminal automatically assuming the set "permanent transmit call" state when it is powered up (e.g. by switching it on or attaching a battery) (i.e. such that if the control unit is detached from the terminal after the terminal has been set into the "permanent transmit call" state, the terminal remains in that state).

In this case, the detachable control unit may have "hard keys" or "soft keys" for controlling the terminal in this manner, and may, e.g., be connected (coupled) to the terminal by a cable, by a short range radio connection (e.g. Bluetooth), and/or by a near-field wireless connection (e.g. an inductive loop), etc..

If Whisper Mode is enabled, it preferably gets activated/deactivated when the terminal enters/exits the "permanent transmit call" state.

The permanent transmit soft key function preferably has no effect if invoked when the terminal is participating on a full duplex call.

Activation of the Permanent Transmit soft key function preferably overrides the live microphone functionality of an alarm call.

When the terminal switches on and successfully attaches to/selects a TMO/DMO talk group after initial talk group request, the permanent transmit function can preferably be automatically invoked, for example by setting a parameter to indicate that operation.

When the "permanent transmit call" state is active, the terminal preferably informs the user of that fact, for example by means of an appropriate display.

## Claims

1. A method of operating a communications terminal of a mobile communications system, comprising:
the communications terminal receiving an instruction to enter a mode of operation in which the communications terminal will transmit without the need for a user to press or hold a key of the communications terminal; and
in response to receiving such an instruction, the communications terminal transmitting a request to transmit together with an associated transmission priority setting; and
in response to the request to transmit being granted, the communications terminal transmitting on the allocated transmission channel without the need for a user to press or hold a key of the communications terminal; and
interrupting the communications terminal's transmission on the allocated transmission channel if another terminal is granted permission to transmit on the same channel with a higher transmission priority setting; and
the communications terminal, if the terminal's transmission is interrupted, automatically attempting to resume or re-establish its transmission after the interruption has finished.

2. The method of claim 1, comprising:
the communications terminal receiving the instruction to enter said mode of operation from a user of the terminal.

3. The method of claim 1 or 2, comprising the communications terminal receiving the instruction to enter said mode of operation via a control unit that is removably coupled to the terminal.

4. The method of claim 1, 2 or 3, comprising:
the communications terminal receiving a command from a remote user containing the instruction to enter said mode of operation.

5. The method of claim 4, wherein the command from a remote user further comprises at least one of; (i) a destination identity to which the terminal should address any subsequent transmission when operating in said mode of operation; and (ii) one or more control parameters for use with any subsequent transmission when the terminal is operating in said mode of operation.

6. The method of any one of claims 1 to 5, comprising:
the communications terminal only exiting said mode of operation if an instruction to exit said mode of operation is received from the entity that sent the original instruction to the terminal to enter said mode of operation.

7. The method of any one of claims 1 to 6, comprising:
the communications terminal remaining in said mode of operation if the power supply to the terminal is interrupted.

8. A communications terminal for a mobile communications system, comprising:
means for receiving an instruction from a user of the terminal, and/or an instruction from a remote user, to enter a mode of operation in which the communications terminal will transmit without the need for a user to press or hold a key of the communications terminal; and
means for transmitting a request to transmit together with an associated transmission priority setting in response to receiving such an instruction; and
means for, in response to the request to transit being granted, transmitting on the allocated transmission channel without the need for a user to press or hold a key of the communications terminal; and
means for interrupting the transmission on the allocated transmission channel if another terminal is granted permission to transmit on the same channel with a higher transmission priority setting; and
means for, if the terminal's transmission is interrupted, automatically attempting to resume or re-establish the transmission after the interruption has finished.

9. The communications terminal of claim 8, comprising a removable control unit for inputting the instruction to enter said mode of operation to the terminal.

10. The communications terminal of claim 8 or 9, wherein the terminal is configured to only exit said mode of operation if an appropriate instruction to stop its transmission is received from the entity that sent the instruction to enter the mode of operation.

11. The communications terminal of claim 8, 9 or 10, wherein the terminal is configured to retain in said mode of operation if the power supply to the communications terminal is interrupted.

12. A mobile communications system, comprising:
a system infrastructure; and
one or more communications terminals as claimed in any one of claims 8 to 11.

13. The mobile communications system of claim 12, wherein:
the system infrastructure comprises:
means for receiving a request to transmit together with an associated transmission priority setting from a communications terminal;
means for, in response to such a request, determining whether to grant the communications terminal permission to transmit on an allocated transmission channel without the need for a user to press or hold a key of the communications terminal; and
means for, if it is determined that the communications terminal should be granted permission to transmit, transmitting such permission to the communications terminal.

14. The mobile communications system of claim 12 or 13, wherein said communications system is a TETRA mobile communications system.

15. A computer program element comprising computer software code portions for performing the method of any one of claims 1 to 7 when the program element is run on data processing means.

## Patentansprüche

1. Verfahren zum Betreiben eines Kommunikationsendgeräts eines mobilen Kommunikationssystems, das Folgendes umfasst:
dass das Kommunikationsendgerät eine Anweisung empfängt, in einen Betriebsmodus einzutreten, in dem das Kommunikationsendgerät ohne die Notwendigkeit, dass ein Anwender eine Taste des Kommunikationsendgeräts hält oder drückt, senden wird, und
dass das Kommunikationsendgerät, als Reaktion auf das Empfangen einer solchen Anweisung, eine Anfrage zum Senden zusammen mit einer zugeordneten Übertragungsprioritätseinstellung sendet und
dass das Kommunikationsendgerät als Reaktion darauf, dass die Anfrage zum Senden eingeräumt wird, auf dem zugewiesenen Übertragungskanal ohne die Notwendigkeit, dass ein Anwender eine Taste des Kommunikationsendgeräts hält oder drückt, sendet und
dass die Übertragung des Kommunikationsendgeräts auf dem zugewiesenen Übertragungskanal unterbrochen wird, falls einem anderen Endgerät die Berechtigung eingeräumt wird, auf dem gleichen Kanal mit einer höheren Übertragungsprioritätseinstellung zu senden, und
dass das Kommunikationsendgerät, falls die Übertragung des Endgeräts unterbrochen wird, automatisch versucht, seine Übertragung wiederaufzunehmen oder wiederherzustellen, nachdem die Unterbrechung geendet hat.

2. Verfahren nach Anspruch 1, das Folgendes umfasst:
dass das Kommunikationsendgerät die Anweisung, in den Betriebsmodus einzutreten, von einem Anwender des Endgeräts empfängt.

3. Verfahren nach Anspruch 1 oder 2, das umfasst, dass das Kommunikationsendgerät die Anweisung, in den Betriebsmodus einzutreten, über eine Steuerungseinheit empfängt, die abnehmbar an das Endgerät gekoppelt ist.

4. Verfahren nach Anspruch 1, 2 oder 3, das Folgendes umfasst:
dass das Kommunikationsendgerät von einem entfernten Anwender einen Befehl empfängt, der die Anweisung, in den Betriebsmodus einzutreten, enthält.

5. Verfahren nach Anspruch 4, wobei der Befehl von einem entfernten Anwender wenigstens eines von dem Folgendes umfasst: (i) eine Bestimmungsidentität, an die das Endgerät jegliche anschließende Übertragung richten sollte, wenn es in dem Betriebsmodus arbeitet, und (ii) einen oder mehrere Steuerungsparameter zur Verwendung bei jeglicher anschließende Übertragung, wenn das Endgerät in dem Betriebsmodus arbeitet.

6. Verfahren nach einem der Ansprüche 1 bis 5, das Folgendes umfasst:
dass das Kommunikationsendgerät den Betriebsmodus nur verlässt, falls eine Anweisung, den Betriebsmodus zu verlassen, von der Instanz empfangen wird, welche die ursprüngliche Anweisung, in den Betriebsmodus einzutreten, an das Endgerät sendete.

7. Verfahren nach einem der Ansprüche 1 bis 6, das Folgendes umfasst:
dass das Kommunikationsendgerät in dem Betriebsmodus bleibt, falls die Energieversorgung zu dem Endgerät unterbrochen wird.

8. Kommunikationsendgerät für ein mobiles Kommunikationssystem, wobei das Endgerät Folgendes umfasst:
Mittel zum Empfangen einer Anweisung von einem Anwender des Endgeräts und/oder einer Anweisung von einem entfernten Anwender, in einen Betriebsmodus einzutreten, in dem das Kommunikationsendgerät ohne die Notwendigkeit, dass ein Anwender eine Taste des Kommunikationsendgeräts hält oder drückt, senden wird, und
Mittel zum Übertragen einer Anfrage zum Senden zusammen mit einer zugeordneten Übertragungsprioritätseinstellung, als Reaktion auf das Empfangen einer solchen Anweisung, und
Mittel zum Senden auf dem zugewiesenen Übertragungskanal ohne die Notwendigkeit, dass ein Anwender eine Taste des Kommunikationsendgeräts hält oder drückt, als Reaktion darauf, dass die Anfrage zum Senden eingeräumt wird, und
Mittel zum Unterbrechen der Übertragung auf dem zugewiesenen Übertragungskanal, falls einem anderen Endgerät die Berechtigung eingeräumt wird, auf dem gleichen Kanal mit einer höheren Übertragungsprioritätseinstellung zu senden, und
Mittel, um, falls die Übertragung des Endgeräts unterbrochen wird, automatisch zu versuchen, die Übertragung wiederaufzunehmen oder wiederherzustellen, nachdem die Unterbrechung geendet hat.

9. Kommunikationsendgerät nach Anspruch 8, das eine abnehmbare Steuerungseinheit umfasst, um die Anweisung, in den Betriebsmodus einzutreten, in das Endgerät einzugeben.

10. Kommunikationsendgerät nach Anspruch 8 oder 9, wobei das Endgerät dafür konfiguriert ist, den Betriebsmodus nur zu verlassen, falls eine entsprechende Anweisung, ihre Übertragung zu beenden, von der Instanz empfangen wird, welche die Anweisung, in den Betriebsmodus einzutreten, sendete.

11. Kommunikationsendgerät nach Anspruch 8, 9 oder 10, wobei das Endgerät dafür konfiguriert ist, in dem Betriebsmodus zu bleiben, falls die Energieversorgung zu dem Kommunikationsendgerät unterbrochen wird.

12. Mobiles Kommunikationssystem, das Folgendes umfasst:
eine Systeminfrastruktur und
ein oder mehrere Kommunikationsendgeräte nach einem der Ansprüche 8 bis 11.

13. Mobiles Kommunikationssystem nach Anspruch 12, wobei:
die Systeminfrastruktur Folgendes umfasst:
Mittel zum Empfangen einer Anfrage zum Senden zusammen mit einer zugeordneten Übertragungsprioritätseinstellung von einem Kommunikationsendgerät,
Mittel zum Bestimmen, als Reaktion auf eine solche Anfrage, ob dem Kommunikationsendgerät eine Berechtigung eingeräumt wird, auf einem zugewiesenen Übertragungskanal ohne die Notwendigkeit, dass ein Anwender eine Taste des Kommunikationsendgeräts hält oder drückt, zu senden, und
Mittel zum Übertragen, falls festgestellt wird, dass dem Kommunikationsendgerät eine Berechtigung zum Senden eingeräumt werden sollte, einer solchen Berechtigung an das Kommunikationsendgerät.

14. Mobiles Kommunikationssystem nach Anspruch 12 oder 13, wobei das Kommunikationssystem ein mobiles TETRA-Kommunikationssystem ist.

15. Rechnerprogrammelement, das Rechnersoftware-Codeabschnitte zum Ausführen des Verfahrens nach einem der Ansprüche 1 bis 7, wenn das Programmelement auf Datenverarbeitungsmitteln laufen gelassen wird, umfasst.

## Revendications

1. Procédé de fonctionnement d'un terminal de communications d'un système de communications mobile, dans lequel :
le terminal de communications reçoit une instruction de saisir un mode de fonctionnement dans lequel le terminal de communications transmettra sans nécessité de la part d'un utilisateur de presser ou de maintenir une touche du terminal de communications ;
en réponse à la réception d'une telle instruction, le terminal de communications transmet une demande de transmission conjointement avec un réglage de priorité de transmission associée ;
en réponse à la demande de transmission qui est accordée, le terminal de communications transmet sur le canal de transmission affecté sans nécessité de la part d'un utilisateur de presser ou de maintenir une touche du terminal de communications ;
la transmission du terminal de communications est interrompue sur le canal de transmission affecté si un autre terminal se voit accorder la permission de transmettre sur le même canal avec un réglage de priorité de transmission plus élevé ; et
le terminal de communications, si la transmission du terminal est interrompue, tente automatiquement de reprendre ou de rétablir sa transmission une fois que l'interruption s'est terminée.

2. Procédé selon la revendication 1, dans lequel :
le terminal de communications reçoit l'instruction de saisir ledit mode de fonctionnement de la part d'un utilisateur du terminal.

3. Procédé selon la revendication 1 ou la revendication 2, dans lequel le terminal de communications reçoit l'instruction de saisir ledit mode de fonctionnement via une unité de commande qui est couplée de manière amovible au terminal.

4. Procédé selon la revendication 1, 2 ou 3, dans lequel :
le terminal de communications reçoit un ordre d'un utilisateur distant contenant l'instruction de saisir ledit mode de fonctionnement.

5. Procédé selon la revendication 4, dans lequel l'ordre d'un utilisateur distant comprend par ailleurs au moins l'un des éléments suivants : (i) une identité de destination à laquelle le terminal doit adresser toute transmission ultérieure lorsqu'il opère dans ledit mode de fonctionnement ; et (ii) un ou plusieurs paramètres de commande à utiliser dans toute transmission ultérieure lorsque le terminal opère dans ledit mode de fonctionnement.

6. Procédé selon l'une quelconque des revendications 1 à 5, dans lequel :
le terminal de communications ne met en oeuvre ledit mode de fonctionnement que si une instruction de mettre en oeuvre ledit mode de fonctionnement est reçue de l'entité qui a envoyé l'instruction initiale au terminal de saisir ledit mode de fonctionnement.

7. Procédé selon l'une quelconque des revendications 1 à 6, dans lequel :
le terminal de communications reste dans ledit mode de fonctionnement si l'alimentation en énergie du terminal est interrompue.

8. Terminal de communications pour un système de communications mobile, comprenant :
des moyens pour recevoir une instruction d'un utilisateur du terminal et/ou une instruction d'un utilisateur distant, de saisir un mode de fonctionnement dans lequel le terminal de communications transmettra sans la nécessité de la part d'un utilisateur de presser ou de maintenir une touche du terminal de communications ;
des moyens pour transmettre une demande de transmettre conjointement avec un réglage de priorité de transmission associé en réponse la réception d'une telle instruction ;
des moyens pour, en réponse à la demande de transmettre qui est accordée, transmettre sur le canal de transmission affecté sans la nécessité de la part d'un utilisateur de presser ou de maintenir une touche du terminal de communications ;
des moyens pour interrompre la transmission sur le canal de transmission affecté si un autre terminal se voit autorisé à transmettre sur le même canal avec un réglage de priorité de transmission plus élevé ; et
des moyens pour, si la transmission du terminal est interrompue, tenter automatiquement de reprendre ou de rétablir la transmission une fois que l'interruption s'est terminée.

9. Terminal de communications selon la revendication 8, comprenant une unité de commande amovible pour saisir l'instruction de saisir ledit mode de fonctionnement dans le terminal.

10. Terminal de communications selon la revendication 8 ou la revendication 9, dans lequel le terminal est configuré pour ne mettre en oeuvre ledit mode de fonctionnement que si une instruction appropriée d'arrêter sa transmission est reçue de l'entité qui a envoyé l'instruction de saisir le mode de fonctionnement.

11. Terminal de communications selon la revendication 8, 9 ou 10, dans lequel le terminal est configuré pour rester dans ledit mode de fonctionnement si l'alimentation en énergie du terminal de communications est interrompue.

12. Système de communications mobile, comprenant :
une infrastructure de système ; et
un ou plusieurs terminaux de communications selon l'une quelconque des revendications 8 à 11.

13. Système de communications mobile selon la revendication 12, dans lequel :
l'infrastructure du système comprend :
des moyens pour recevoir une demande de transmettre conjointement avec un réglage de priorité de transmission associé d'un terminal de communications ;
des moyens pour, en réponse à une telle demande, déterminer s'il faut accorder au terminal de communications la permission de transmettre sur un canal de transmission affecté sans la nécessité de la part d'un utilisateur de presser ou de maintenir une touche du terminal de communications ; et
des moyens pour, s'il est déterminé que le terminal de communications doit se voir accorder la permission de transmettre, transmettre cette permission au terminal de communications.

14. Système de communications mobile selon la revendication 12 ou la revendication 13, dans lequel ledit système de communications est un système de communications mobile TETRA.

15. Elément de programme informatique comprenant des portions de code logicielles informatiques pour effectuer le procédé selon l'une quelconque des revendications 1 à 7, lorsque l'élément de programme tourne sur des moyens de traitement de données.
